# EUROPÄISCHE PATENTSCHRIFT

(11) **EP 3 823 445 B1**
(45) Veröffentlichungstag und Bekanntmachung des Hinweises auf die Patenterteilung: **12.06.2024**
(21) Anmeldenummer: 19737747.6
(22) Anmeldetag: 11.07.2019
(51) Int. Cl.: A01M 21/04, E01H 11/00

(54) **BEKÄMPFUNG VON UNERWÜNSCHTEN PFLANZEN MIT HILFE ELEKTRISCHER ENERGIE**
CONTROL OF UNWANTED PLANTS BY MEANS OF ELECTRICAL POWER
LUTTE CONTRE LES PLANTES INDÉSIRABLES À L'AIDE DE L'ÉNERGIE ÉLECTRIQUE

(30) Priorität: 19.07.2018 EP 18184470; 04.03.2019 EP 19160443
(43) Veröffentlichungstag der Anmeldung: 26.05.2021
(73) Patentinhaber: Bayer Aktiengesellschaft, 51373 Leverkusen (DE)
(72) Erfinder: VOELKENING, Stephan, 12161 Berlin (DE)
(74) Vertreter: BIP Patents
(86) Internationale Anmeldenummer: PCT/EP2019/068652
(87) Internationale Veröffentlichungsnummer: WO 2020/016088

(56) Entgegenhaltungen:
- EP-A1- 0 026 248
- WO-A2-2018/050143
- FR-A1- 2 487 168
- US-A- 565 671
- US-A- 2 007 383
- US-A1- 2006 265 946

## Beschreibung

Gegenstand der vorliegenden Erfindung sind ein System, ein Verfahren und die Verwendung des erfindungsgemäßen Systems zur Bekämpfung von unerwünschten Pflanzen, insbesondere auf Gleisanlagen, mit Hilfe elektrischer Energie.

Die Bekämpfung von Pflanzen auf Gleisanlagen ist aus Sicherheitsgründen unbedingt erforderlich. Insbesondere das Schotterbett muss von Pflanzenbewuchs befreit und/oder freigehalten werden. Das Schotterbett ist üblicherweise flexibel und hilft sowohl statische als auch dynamische Belastungen gleichmäßig auf den Unterbau zu übertragen. Die unzähligen Hohlräume zwischen den einzelnen Steinen federn das enorme Gewicht von fahrenden Zügen und die Stöße wie ein Puffer ab.

Pflanzen sowie der durch sie festgehaltene Humus können die Zwischenräume mit der Zeit verstopfen, was die Sicherheit der Züge erheblich gefährden kann. Aus Sicherheitsgründen muss deshalb Bewuchs aller Art von den Gleisanlagen ferngehalten werden.

Üblicherweise wird Pflanzenwachstum auf Gleisanlagen durch das Ausbringen von Herbiziden verhindert. So genannte Spritzzüge sind Spezialzüge zur Streckenpflege von Schienenbahnen. Sie dienen dem Ausbringen von Herbiziden, damit das Schotterbett nicht verkrautet.

Es kann Bereiche geben, in denen eine Applikation von Herbiziden nicht gewünscht ist, oder, zum Beispiel aufgrund von Resistenzen, nicht zum erwünschten Erfolg führt. Im Stand der Technik sind alternative Methoden zur Unkrautbekämpfung auf Gleisanlagen beschrieben, zum Beispiel die Verwendung von elektrischer Energie (siehe z.B. EP0026248A1, EP1256275A2, WO2018050143A2).

Bei der Bekämpfung von unerwünschten Pflanzen mittels elektrischer Energie wird die jeweilige Pflanze in Kontakt mit einer ersten Elektrode gebracht (in dieser Beschreibung auch als Kontaktelektrode bezeichnet). Eine zweite Elektrode (in dieser Beschreibung auch als Sammelelektrode bezeichnet) steht üblicherweise in Kontakt mit dem Boden, in dem die Pflanze wächst. Zwischen den Elektroden ist eine Spannung angelegt. Kommt die Pflanze in Kontakt mit der ersten Elektrode, fließt ein elektrischer Strom von der ersten Elektrode durch zumindest einen Teil der Pflanze zur zweiten Elektrode. Nach Möglichkeit werden auch die Wurzeln durch den elektrischen Strom erfasst. Dieser Stromschlag führt zu einer Schwächung oder Abtötung der Pflanze. Üblicherweise sind die Elektroden an einer Vorrichtung angebracht, die sich entlang der Gleise bewegt. Die Elektroden sind so angeordnet, dass sie bei der Bewegung der Vorrichtung in Kontakt mit Pflanzen im Gleisbereich kommen. Der Kontakt führt zu einer Übertragung von elektrischer Energie auf die Pflanzen, wodurch die Pflanzen unschädlich gemacht werden.

Um eine Pflanze effektiv zu bekämpfen und an einer weiteren Ausbreitung zu hindern, ist eine Mindestmenge an elektrischer Energie erforderlich, die in die Pflanze eingebracht wird.

Die Energiemenge kann über die Spannung und/oder die Kontaktzeit (die Zeitspanne, während der eine Pflanze in Kontakt mit der Kontaktelektrode steht) gesteuert werden. Da die Spannung insbesondere aus sicherheitstechnischen Gründen nicht beliebig erhöht werden kann, kann die Kontaktzeit nicht beliebig reduziert werden. Dies führt zu einer Limitierung der Geschwindigkeit, mit der sich die Vorrichtung entlang der Gleise bewegen kann.

Das Ziel sollte jedoch eine Bekämpfung bei möglichst hoher Geschwindigkeit sein, denn in der Zeitspanne, in der eine Unkrautbekämpfung in einem Gleisabschnitt stattfindet, ist dieser Gleisabschnitt üblicherweise für den Güter- und Personenverkehr blockiert.

Ein weiteres Problem betrifft die Unebenheiten, die üblicherweise in Gleisanlagen auftreten. Das Schotterbett mit den darin befindlichen Steinen, Schwellen und Gleisen sowie die anschließenden Schotterflanken stellen eine sehr unebene Erdoberfläche dar. In WO2018050143A2 wird vorgeschlagen, die Elektroden an eine sensorgeführte Höhenverstelleinrichtung zu montieren. Eine solche automatisierte mechanische Anpassung der Höhe weist jedoch eine vergleichsweise hohe Trägheit auf, die sich nachteilig auf die Geschwindigkeit auswirkt.

Ein weiteres Problem stellt die raue und scharfkantige Oberfläche dar, die durch den Schotter gebildet wird. Diese führt in Kontakt mit Elektroden zu einer hohen Abrasion. Die in WO2018050143A2 vorgeschlagenen Bürstenelektroden sind bei zunehmender Geschwindigkeit sehr hohen Kräften ausgesetzt und werden sehr schnell verschlissen.

Ausgehend vom beschriebenen Stand der Technik besteht die objektive technische Aufgabe darin, eine Vorrichtung und ein Verfahren zur Bekämpfung von unerwünschten Pflanzen insbesondere auf Gleisanlagen bereitzustellen, die eine hohe Geschwindigkeit bei der Bekämpfung erlaubt und die negativen Folgen von Abrasion gering hält.

Gelöst wird diese Aufgabe durch die Gegenstände der unabhängigen Patentansprüche. Bevorzugte Ausführungsformen finden sich in den abhängigen Patentansprüchen sowie in der vorliegenden Beschreibung.

Ein erster Gegenstand der Erfindung ist ein System umfassend
- mindestens eine Kontaktelektrode,
- mindestens eine Sammelelektrode,
- mindestens eine Spannungsquelle zum Anlegen einer Spannung zwischen der mindestens einen Kontaktelektrode und der mindestens einen Sammelelektrode, und
- Mittel zur Bewegung des Systems in eine Bewegungsrichtung,

wobei die mindestens eine Kontaktelektrode hängend angebracht ist,
wobei die mindestens eine Kontaktelektrode in Bezug auf eine äußere Kraft, die entgegen der Bewegungsrichtung auf die mindestens eine Kontaktelektrode einwirkt, eine geringere Biegesteifigkeit aufweist, als in Bezug auf eine äußere Kraft, die quer zur Bewegungsrichtung auf die mindestens eine Kontaktelektrode einwirkt.

Ein weiterer Gegenstand der Erfindung ist die Verwendung des erfindungsgemäßen Systems zur Bekämpfung von Pflanzen auf Bahntrassen oder Gleisanlagen.

Ein weiterer Gegenstand der Erfindung ist ein Verfahren umfassend die Schritte
- Bereitstellen eines Systems, wobei das System umfasst:
   - mindestens eine Kontaktelektrode,
   - mindestens eine Sammelelektrode,
   - mindestens eine Spannungsquelle zum Anlegen einer Spannung zwischen der mindestens einen Kontaktelektrode und der mindestens einen Sammelelektrode, und
   - Mittel zur Bewegung des Systems in eine Bewegungsrichtung,

   wobei die mindestens eine Kontaktelektrode hängend angebracht ist,
   wobei die mindestens eine Kontaktelektrode in Bezug auf eine äußere Kraft, die entgegen der Bewegungsrichtung auf die mindestens eine Kontaktelektrode einwirkt, eine geringere Biegesteifigkeit aufweist, als in Bezug auf eine äußere Kraft, die quer zur Bewegungsrichtung auf die mindestens eine Kontaktelektrode einwirkt.
- Anlegen einer Spannung zwischen der mindestens einen Kontaktelektrode und der mindestens einen Sammelelektrode,
- Bewegen des Systems über einen Erdbereich, in dem sich Pflanzen befinden, und dabei
- Inkontaktbringen der mindestens einen Kontaktelektrode mit mindestens einem Teil von mindestens einer Pflanze,
- Inkontaktbringen der mindestens einen Sammelelektrode
   a) mit dem Boden, in dem die mindestens eine Pflanze wächst, und/oder
   b) mit einem anderen Teil der mindestens einen Pflanze, und/oder
   c) mit mindestens einem Teil einer benachbarten Pflanze,
wobei zwischen der mindestens einen Kontaktelektrode und der mindestens einen Sammelelektrode ein Strom fließt, der zumindest durch einen Teil der mindestens einen Pflanze fließt und die mindestens ein Pflanze schwächt oder zerstört.

Die Erfindung wird nachstehend näher erläutert, ohne zwischen den Erfindungsgegenständen (System, Verwendung, Verfahren) zu unterscheiden. Die nachfolgenden Erläuterungen sollen vielmehr für alle Erfindungsgegenstände in analoger Weise gelten, unabhängig davon, in welchem Kontext (System, Verwendung, Verfahren) sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Zur Ausführung der Erfindung sind mindestens eine Kontaktelektrode, mindestens eine Sammelelektrode und mindestens eine Spannungsquelle zum Anlegen einer elektrischen Spannung zwischen der Kontaktelektrode und der Sammelelektrode erforderlich.

Weiterhin sind Mittel erforderlich, die die mindestens eine Kontaktelektrode über einen Erdbereich (Boden) bewegt, in dem sich mindestens eine Pflanze befindet, die bekämpft werden soll.

Die genannten Elemente (Kontaktelektrode, Sammelelektrode, Spannungsquelle, Mittel zur Bewegung) können Bestandteile einer einzigen Vorrichtung sein. Die Vorrichtung kann ein Schienenfahrzeug sein; es kann sich aber auch um ein Straßenfahrzeug (z.B. Unimog) handeln, das über Mittel verfügt, um sich auf Schienen oder entlang von Schienen fortzubewegen (siehe z.B. Fig. 1 in EP0026248A1).

Die genannten Elemente (Kontaktelektrode, Sammelelektrode, Spannungsquelle, Mittel zur Bewegung) können separate Gegenstände sein, die zusammengefügt werden, um das erfindungsgemäße Verfahren auszuführen. Insbesondere kann es sich bei den Mitteln zur Bewegung des erfindungsgemäßen Systems um eine eigenständige Vorrichtung (ein Fahrzeug) handeln. Denkbar ist zum Beispiel, dass das erfindungsgemäße System ein transportables Gerät (Pflanzenbekämpfungseinheit) umfasst, das die mindestens eine Kontaktelektrode, die mindestens eine Sammelelektrode und die mindestens eine Spannungsquelle umfasst. Die Pflanzenbekämpfungseinheit kann an einem Schienenfahrzeug oder an einem Fahrzeug, das sich auf oder entlang von Schienen fortbewegen kann, und das ein separater Bestandteil des erfindungsgemäßen System ist, angebracht werden. Es ist ferner denkbar, dass das erfindungsgemäße System mehrere separate Bestandteile (Elemente) umfasst, die einzeln an ein Schienenfahrzeug oder ein Fahrzeug, das sich auf oder entlang von Schienen fortbewegen kann, angebracht werden, um die Erfindung auszuüben. Die Spannungsquelle kann ein solches Element sein, eine Kontaktelektrode oder eine Mehrzahl an Kontaktelektroden können ein weiteres Element sein, eine Sammelelektrode oder eine Mehrzahl an Sammelelektroden können ein weiteres Element sein.

Die mindestens eine Kontaktelektrode ist diejenige Elektrode, die in Kontakt mit einer Pflanze gebracht wird, um elektrische Energie in die Pflanze einzubringen und die Pflanze damit an einer weiteren Ausbreitung zu hindern; im Optimalfall wird sie getötet, andernfalls wird sie geschwächt. Vorzugsweise ist eine Mehrzahl an Kontaktelektroden vorhanden. Die Zahl der Kontaktelektroden liegt vorzugsweise im Bereich von 10 bis 1000.

Die mindestens eine erfindungsgemäße Kontaktelektrode ist hängend angebracht, das bedeutet, dass ein Teil der Kontaktelektrode an dem erfindungsgemäßen System fixiert ist (entweder direkt oder über weitere Elemente), während ein anderer Teil der Kontaktelektrode infolge der Schwerkraft in Richtung des Bodens gezogen wird. Je nach Länge der Kontaktelektrode hängt sie über dem Boden oder es kommt ein Teil der Kontaktelektrode auf dem Boden zu liegen.

Es ist denkbar, dass die mindestens eine Kontaktelektrode so ausgeführt ist, dass sie den Boden berührt; es ist aber auch denkbar, dass die mindestens eine Kontaktelektrode so ausgeführt ist, dass sie den Boden nicht berührt.

Die mindestens eine erfindungsgemäße Kontaktelektrode ist so ausgeführt, dass ihre Länge variabel gestaltet werden kann. Die Kontaktelektrode ist dazu auf einer Spule aufgewickelt und die Länge der Kontaktelektrode kann dadurch variiert werden, dass ein größerer oder kleinerer Teil der Kontaktelektrode von der Spule abgewickelt wird. Durch die veränderbare Länge der Kontaktelektrode kann der Abstand des unteren (dem Boden zugewandten) Endes der Kontaktelektrode zum Boden variiert werden (für den Fall, dass die Kontaktelektrode den Boden nicht berührt) bzw. kann die Größe der Auflagefläche der Kontaktelektrode auf dem Boden variiert werden (für den Fall, dass die Kontaktelektrode den Boden berührt). Durch die veränderbare Länge der Kontaktelektrode kann ferner bestimmt werden, welche Pflanzen (in Bezug auf ihre Größe) von der Elektrode erfasst werden (und/oder welche Teile der Pflanzen erfasst werden) bzw. welche nicht erfasst werden; hängt das dem Boden zugewandte Ende der Kontaktelektrode zu hoch, erreicht es kleinere Pflanzen nicht.

In einer bevorzugten Ausführungsform liegt der Abstand zwischen dem unteren (dem Boden zugewandten) Ende der Kontaktelektrode und dem Boden bei einer ruhenden Vorrichtung (ruhend in Bezug zur Erdoberfläche) im Bereich von -0,5 Meter bis 0,5 Meter. Dabei bedeutet ein negativer Abstand (z.B. -0,5 Meter), dass die Kontaktelektrode den Boden berührt und dass der Bereich der Kontaktelektrode, der in Kontakt mit dem Boden steht, eine entsprechende Länge (z.B. von 0,5 Metern) aufweist. Besonders bevorzugt beträgt der Abstand -0,3 Meter bis 0,05 Meter.

Die mindestens eine Kontaktelektrode ist flexibel ausgeführt. Das bedeutet, dass die Form der Kontaktelektrode durch eine von außen wirkende Kraft geändert werden kann. Wie flexibel ein Körper ist, lässt sich durch seine Steifigkeit angeben. Die Steifigkeit beschreibt den Widerstand eines Körpers gegen elastische Verformung durch eine äußere Kraft oder ein Moment (Biegemoment oder Torsionsmoment, je nach Beanspruchung). Entsprechend gibt es verschiedene Arten von Steifigkeiten: Dehn-, Biege- und Torsionssteifigkeit. Je höher die Steifigkeit ist, desto weniger flexibel ist ein Körper.

Für diesen Abschnitt wird angenommen, dass die hängend ausgeführte Kontaktelektrode den Boden berührt. Wird eine solche Kontaktelektrode gegenüber dem Boden in eine Bewegungsrichtung bewegt, überstreift die Kontaktelektrode den Boden. Je geringer die Biegesteifigkeit ist, desto geringer ist der Widerstand, den die Kontaktelektrode der Bewegung entgegensetzt; je geringer die Biegesteifigkeit ist, desto einfacher kann die Kontaktelektrode Hindernissen ausweichen; die auf die Kontaktelektrode wirkenden Kräfte werden durch das Ausweichen vermindert, Abrasion wird reduziert.

Analoges gilt für Kontaktelektroden, die nicht den Boden berühren aber bei einer Bewegung der Vorrichtung gegen Pflanzen/Pflanzenteile schlagen. Wären die Kontaktelektroden starr ausgeführt, würden sie bei einem Schlag gegen eine Pflanze der Bewegung einen maximalen Widerstand entgegensetzen und dadurch sehr schnell verschleißen. Zudem führt eine geringe Biegesteifigkeit (hohe Flexibilität) dazu, dass eine Kontaktelektrode bei der Bewegung des erfindungsgemäßen Systems Pflanzen/Pflanzenteile überstreift und dabei für einen längeren Zeitraum in Kontakt mit der Pflanze steht. Eine solche, durch eine geringe Biegesteifigkeit verlängerte Kontaktzeit bedeutet, dass die Bewegungsgeschwindigkeit entsprechend erhöht werden kann, ohne dass der Energieeintrag in die Pflanze reduziert wird.

Die mindestens eine erfindungsgemäße Kontaktelektrode ist dadurch gekennzeichnet, dass sie in einer Dimension eine geringere Biegesteifigkeit aufweist als in einer anderen Dimension (Anisotpropie in Bezug auf die Biegesteifigkeit). Zur Verdeutlichung der Erfindung werden Dimensionen und Richtungen in der vorliegenden Beschreibung vorwiegend anhand der Bewegungsrichtung des erfindungsgemäßen Systems definiert.

Vorzugsweise ist die Biegesteifigkeit in Bezug auf eine Kraft, die in einer Richtung entgegen der Bewegungsrichtung des erfindungsgemäßen Systems auf die Kontaktelektrode einwirkt, größer als 10 mN gemessen nach DIN 53 121 bei 15° und 10 mm, und geringer als 200 kNmm² (zum Messverfahren siehe G. Fritzsche et al.; TECHNISCHE MECHANIK, Band 25, Heft 3-4, (2005), 190-207). Weitere Messverfahren zur Bestimmung der Biegesteifigkeit verschiedener Probekörper sind zum Beispiel beschrieben in DE19531858A1 und DE102010042443A1 und den darin zitierten Publikationen.

In einer bevorzugten Ausführungsform ist die Kontaktelektrode symmetrisch ausgeführt, so dass die Biegesteifigkeit der Kontaktelektrode in Bezug auf eine Kraft, die in Richtung der Bewegungsrichtung auf die Kontaktelektrode einwirkt, der Biegesteifigkeit der Kontaktelektrode in Bezug auf eine Kraft, die entgegengesetzt zur Bewegungsrichtung wirkt, entspricht. Dies ermöglicht es, das erfindungsgemäße System in die zwei entgegengesetzten Bewegungsrichtungen auf Schienen zu betreiben (vorwärts und rückwärts).

Die Biegesteifigkeit einer erfindungsgemäßen Kontaktelektrode ist in Bezug auf eine Kraft, die quer zur Bewegungsrichtung auf die Kontaktelektrode einwirkt, größer als in Bezug auf eine Kraft, die entgegengesetzt zur Bewegungsrichtung auf die Kontaktelektrode einwirkt. Der Begriff "quer zur Bewegungsrichtung" wird dabei wie folgt definiert: Auf ebener Strecke verlaufen die Bewegungsrichtung und die Richtung entgegengesetzt zur Bewegungsrichtung 180° zueinander und jeweils senkrecht zur Schwerkraft. In einem solchen Fall verläuft die Richtung "quer zur Bewegungsrichtung" sowohl senkrecht (im Winkel von 90° oder 270°) zur Bewegungsrichtung als auch senkrecht (im Winkel von 90° oder 270°) zur Schwerkraft. Bewegungsrichtung, Richtung der Schwerkraft und die Richtung quer zur Bewegungsrichtung bilden ein kartesisches Koordinatensystem.

Die erhöhte Biegesteifigkeit in Bezug auf eine äußere Kraft quer (im Winkel von 90° oder 270°) zur Bewegungsrichtung bewirkt, dass eine Kontaktelektrode bei Kurvenfahrt in Folge der Zentrifugalkraft nur wenig aus ihrer Gleichgewichtslage ausgelenkt wird. Dies verringert die Gefahr, dass die Kontaktelektrode bei Kurvenfahrt mit den Gleisen, mit Teilen des erfindungsgemäßen Systems und/oder mit anderen Körpern, die sich auf Gleisanlagen befinden können (z.B. Masten), in Berührung kommt. Eine hängend ausgeführte Kontaktelektrode schwenkt bei einer Bewegung des erfindungsgemäßen Systems also überwiegend vor und zurück (in Bewegungsrichtung und entgegen der Bewegungsrichtung) und weniger zur Seite (quer zur Bewegungsrichtung).

Vorzugsweise ist die Biegesteifigkeit der mindestens einen Kontaktelektrode in Bezug auf eine äußere Kraft, die quer zur Bewegungsrichtung des erfindungsgemäßen Systems auf die Kontaktelektrode einwirkt, mindestens um den Faktor 10 größer als die Biegesteifigkeit der Kontaktelektrode in Bezug auf eine äußere Kraft, die entgegengesetzt zur Bewegungsrichtung des erfindungsgemäßen Systems auf die Kontaktelektrode einwirkt; besonders bevorzugt ist sie mindestens um den Faktor 20 größer, noch mehr bevorzugt mindestens um den Faktor 30 größer, noch mehr bevorzugt mindestens um den Faktor 40 größer, ganz besonders bevorzugt mindestens um den Faktor 50 größer.

Vorzugsweise ist die Biegesteifigkeit der mindestens einen Kontaktelektrode in Bezug auf eine äußere Kraft, die quer zur Bewegungsrichtung des erfindungsgemäßen Systems auf die Kontaktelektrode einwirkt, größer als 200 kNmm² (zum Messverfahren siehe G. Fritzsche et al.; TECHNISCHE MECHANIK, Band 25, Heft 3-4, (2005), 190-207).

Die Biegesteifigkeit wird zumindest anteilig über die Form der Kontaktelektrode bestimmt. Vorzugsweise weist die Kontaktelektrode die Form eines Bandes auf. Ein Band ist ein quaderförmiger oder annähernd quaderförmiger Körper. Die erfindungsgemäße Kontaktelektrode weist eine Länge *L*, eine Breite *B* und eine

Dicke *D* auf, wobei die Länge *L* ein Vielfaches der Breite *B* beträgt und die Breite *B* größer ist als die Dicke *D*. Im vorliegenden Fall einer erfindungsgemäßen Kontaktelektrode erstreckt sich die Länge entlang der Richtung der Schwerkraft (zumindest bei einer frei hängenden, den Boden nicht berührenden Kontaktelektrode), die Dicke erstreckt sich entlang der Bewegungsrichtung und die Breite erstreckt sich quer zur Bewegungsrichtung. Im vorliegenden Fall einer erfindungsgemäßen Kontaktelektrode beträgt die Länge *L* mindestens das Zehnfache der Breite *B* und die Breite *B* mindestens das Dreifache der Dicke *D.*

In einer bevorzugten Ausführungsform ist die mindestens eine Kontaktelektrode ein Körper mit einer Länge *L,* einer Breite *B* und einer Dicke *D*, wobei *L* ≥ 10 · *B* und *B* ≥ 3 · *D* und wobei der Widerstand, den die Kontaktelektrode einer Kraft in Richtung der Breite entgegensetzt, um einen Faktor von mindestens 10, vorzugsweise mindestens 20, noch mehr bevorzugt mindestens 30, noch mehr bevorzugt mindestens 40, am meisten bevorzugt mindestens 50 größer als der Widerstand, den die Kontaktelektrode einer Kraft in Richtung der Dicke entgegensetzt, ist.

In einer bevorzugten Ausführungsform umfasst die Kontaktelektrode einen Körper aus geflochtenen und/oder verdrillten Metalldrähten.

In einer weiteren bevorzugten Ausführungsform umfasst die Kontaktelektrode einen Körper aus einem Metallblech.

Auch eine Kombination von geflochtenen und/oder verdrillten Metalldrähten und einem oder mehreren Metallblechen ist denkbar.

Vorzugsweise ist eine Mehrzahl an Kontaktelektroden (lamellenförmig) nebeneinander (quer oder schräg zur Bewegungsrichtung) angeordnet (wie bei einem Vorhang). Dabei können die Kontaktelektroden zueinander beabstandet (mit konstantem Abstand oder variierenden Abständen), bündig schließend oder teilweise überlappend angeordnet sein. Auch Mischformen sind denkbar. Der Begriff "schräg zur Bewegungsrichtung" schließt alle Richtungen ein, die weder der Bewegungsrichtung noch der Richtung quer zur Bewegungsrichtung entsprechen. Vorzugsweise liegt eine Richtung "schräg zur Bewegungsrichtung" in der Ebene, die durch die Bewegungsrichtung und die Richtung quer zur Bewegungsrichtung aufgespannt wird.

Mehrere nebeneinander angeordnete Kontaktelektroden können dieselbe Länge aufweisen; die Längen können aber auch variieren.

Mehrere nebeneinander angeordnete Kontaktelektroden können dieselbe Biegesteifigkeit quer und/oder entgegengesetzt zur Bewegungsrichtung und/oder in Bewegungsrichtung aufweisen; die Biegesteifigkeiten können aber auch variieren.

Mehrere nebeneinander angeordnete Kontaktelektroden können dieselbe Dicke aufweisen; die Dicken können aber auch variieren.

Mehrere nebeneinander angeordnete Kontaktelektroden können dieselbe Breite aufweisen; die Breiten können aber auch variieren.

Mehrere nebeneinander angeordnete Kontaktelektroden können dieselbe Form aufweisen; die Formen können aber auch variieren.

Mehrere nebeneinander angeordnete Kontaktelektroden können dasselbe Material aufweisen; die Materialien können aber auch variieren.

In einer bevorzugten Ausführungsform ist eine Mehrzahl an Kontaktelektroden lamellenförmig nebeneinander (quer oder schräg zur Bewegungsrichtung) angeordnet, wobei die Kontaktelektroden jeweils eine Länge aufweisen, die so dimensioniert ist, dass der Abstand zwischen dem unteren (dem Boden zugewandten) Ende der Kontaktelektroden und dem Boden bei einer ruhenden Vorrichtung (ruhend in Bezug zur Erdoberfläche) im Bereich von -0,5 Meter bis 0,5 Meter liegt. Dabei bedeutet ein negativer Abstand (z.B. -0,5 Meter), dass die Kontaktelektrode den Boden berührt und dass der Bereich der Kontaktelektrode, der in Kontakt mit dem Boden steht, eine entsprechende Länge (z.B. von 0,5 Meter) aufweist. Besonders bevorzugt beträgt der Abstand -0,3 Meter bis 0,05 Meter.

In einer bevorzugten Ausführungsform sind mehrere (mindestens zwei, vorzugsweise drei bis zwanzig) Reihen von lamellenförmig nebeneinander (quer oder schräg zur Bewegungsrichtung) angeordneten Kontaktelektroden in Bewegungsrichtung zueinander beabstandet angeordnet. Dabei können die Kontaktelektroden so ausgestaltet sein, dass bei einer Überfahrt der erfindungsgemäßen Vorrichtung über einen Bestand von Pflanzen auf einer Gleisanlage eine Kontaktelektrode in einer hinteren Reihe einen Kontakt zu einer Pflanze zu einem Zeitpunkt erhält, zu dem eine Kontaktelektrode in einer vorderen Reihe den Kontakt zu der Pflanze gerade verliert. Durch eine solche Reihung von Kontaktelektroden entlang der Bewegungsrichtung und dem dadurch erreichten sequenziellen Inkontaktbringen von Pflanzen mit einzelnen Kontaktelektroden wird die integrale Kontaktzeit (und damit der summierte Eintrag elektrischer Energie) erhöht. In einer bevorzugten Ausführungsform sind die Reihen von Kontaktelektroden parallel zueinander angeordnet.

Bei der erfindungsgemäßen Benutzung der Kontaktelektroden ist es üblich, dass die Kontaktelektroden mit der Zeit verschleißen. Es ist üblich, dass die Längen der Kontaktelektroden bei der Benutzung im Verlauf der Zeit abnehmen. Es ist denkbar, dass Material der Kontaktelektrode infolge von Abrasion abgetragen wird; es ist denkbar, dass ein Teil von der Kontaktelektrode abgerissen wird.

In einer besonders bevorzugten Ausführungsform der vorliegenden Erfindung ist eine Abgabevorrichtung vorhanden, die Kontaktelektrodenmaterial nachführt, falls sich die Länge einer Kontaktelektrode reduziert hat. Es ist beispielsweise denkbar, dass die Kontaktelektrode auf einer Spule aufgewickelt ist. Ist die Länge der Kontaktelektrode infolge von Verschleiß reduziert, wickelt die Spule einen Teil der aufgewickelten Kontaktelektrode ab, bis wieder die ursprüngliche Länge erreicht ist.

Das Nachführen von Kontaktelektrodenmaterial zur Kompensation von Verschleiß kann manuell (durch einen Benutzer des erfindungsgemäßen Systems) erfolgen. Denkbar ist zum Beispiel, dass nach einem Einsatz des erfindungsgemäßen Systems die Längen der einzelnen Kontaktelektroden überprüft werden. Bei denjenigen Kontaktelektroden, bei denen die Längen infolge von Verschleiß reduziert sind, wird Kontaktelektrodenmaterial nachgeführt, bis die Längen wieder der Ursprungslänge entsprechen. Denkbar ist auch, dass untere Teile von Kontaktelektroden abgetrennt werden, zum Beispiel, weil sie infolge Abrasion stark beansprucht sind und in ihrer Funktionalität eingeschränkt sind oder in Kürze abzufallen drohen. Nach dem Abtrennen der unteren Teile wird durch Nachführen von Kontaktelektrodenmaterial die ursprüngliche Länge wieder eingestellt.

In einer bevorzugten Ausführungsform erfolgt das Nachführen von Kontaktelektrodenmaterial automatisch. Sensoren erfassen die Längen der einzelnen Kontaktelektroden und führen Kontaktelektrodenmaterial nach, falls die Längen infolge von Verschleiß reduziert sind. Denkbar ist auch, dass verschlissene untere Teile von Kontaktelektroden automatisiert abgetrennt werden, falls Sensoren einen solchen Verschleiß erfassen.

Als Sensoren eignen sich beispielsweise optische Sensoren (beispielsweise eine oder mehrere Kameras oder Lichtschranken). Denkbar sind auch Sensoren, die das Gewicht der Kontaktelektroden messen, das sich bei einem Abriss verringert. Denkbar ist auch, dass die Ströme, die durch eine Kontaktelektrode fließen, gemessen werden. Änderungen der Länge einer Kontaktelektrode können sich auch in den gemessenen Strömen bemerkbar machen.

Die mindestens eine Sammelelektrode kann prinzipiell genauso gestaltet sein wie die mindestens eine Kontaktelektrode und wie in dieser Beschreibung beschrieben. Genauso kann eine Mehrzahl an Sammelelektroden genauso gestaltet sein wie eine Mehrzahl an Kontaktelektroden und wie in dieser Beschreibung beschrieben. Alles das, was in dieser Beschreibung in Bezug auf eine oder mehrere Kontaktelektroden beschrieben ist, ist auch für eine oder mehrere Sammelelektroden denkbar und auf sie anwendbar.

Vorzugsweise hat die mindestens eine Sammelelektrode Kontakt zum Boden oder zu einem der Schienen oder beiden Schienen.

In einer bevorzugten Ausführungsform ist eine Mehrzahl an Sammelelektroden nebeneinander (quer oder schräg zur Bewegungsrichtung) angeordnet, wobei die Sammelelektroden hängend an der Vorrichtung angebracht sind, und/oder wobei die Sammelelektroden entgegen der Bewegungsrichtung eine geringere Biegesteifigkeit aufweisen als quer zur Bewegungsrichtung, und/oder wobei die Sammelelektroden so ausgestaltet sind, dass sie den Boden berühren, und/oder wobei die Sammelelektroden in ihrer Länge variabel gestaltet sind und/oder eine Abgabevorrichtung vorhanden ist, die Sammelelektrodenmaterial nachführt/nachführen kann.

Vorzugsweise ist die mindestens eine Sammelelektrode in Bewegungsrichtung hinter der mindestens einen Kontaktelektrode angeordnet.

Die mindestens eine Sammelelektrode und/oder die mindestens eine Kontaktelektrode können jeweils teilweise mit einer Ummantelung versehen sein, die als elektrischer Isolator dient und einen Kurzschluss verhindern soll, falls sich die mindestens eine Sammelelektrode und die mindestens eine Kontaktelektrode berühren. Eine solche Ummantelung erstreckt sich vorzugsweise von einem oberen Bereich der mindestens einen Sammelelektrode und/oder der mindestens einen Kontaktelektrode bis zu einem mittleren oder unteren Bereich der der mindestens einen Sammelelektrode und/oder der mindestens einen Kontaktelektrode, wobei der unterste Bereich der mindestens einen Sammelelektrode und/oder der mindestens einen Kontaktelektrode frei von einer Ummantelung bleibt.

In einer weiteren bevorzugten Ausführungsform steht die mindestens eine Sammelelektrode in Kontakt mit einer oder mit beiden Schienen. Es ist zum Beispiel denkbar, dass die Sammelelektrode als Rad ausgeführt ist, das auf einer Schiene läuft. In einem solchen Fall ist der Verschleiß an Sammelelektrodenmaterial sehr gering. Ein Strom fließt in einem solchen Fall von der Kontaktelektrode über einen Teil einer Pflanze, die in Kontakt mit der Kontaktelektrode steht, über einen Bereich im Boden zu einer Schiene und von dort zu der Sammelelektrode.

Die Spannungsquelle kann eine durch einen Generator angetriebene Spannungsquelle sein. Denkbar ist auch die Verwendung von Akkumulatoren. In einer bevorzugten Ausführungsform wird die Spannung aus der Oberleitung gewonnen. In einem solchen Fall ist ein Stromabnehmer ein Bestandteil des erfindungsgemäßen Systems, der in Kontakt mit der Oberleitung stehen kann, um ausgehend von dort eine Spannung zwischen der mindestens einen Kontaktelektrode und der mindestens einen Sammelelektrode aufzubauen.

Die Spannung zwischen der mindestens einen Kontaktelektrode und der mindestens einen Sammelelektrode kann eine Gleichspannung oder eine Wechselspannung sein. Vorzugsweise ist es eine Wechselspannung.

In einer bevorzugten Ausführungsform sind im vorderen Bereich des erfindungsgemäßen Systems Düsen zur Applikation einer oder mehrerer Flüssigkeiten in Form von Dampf, Tröpfchen und/oder einem oder mehreren Strahlen vorhanden. Vorzugsweise handelt es sich bei einer solchen Flüssigkeit um Wasser, dem Substanzen zugefügt sein können, die zu einer Erhöhung der elektrischen Leitfähigkeit führen. Auch der Zusatz von Pflanzenschutzmitteln (z.B. Herbiziden) ist denkbar.

Vorzugsweise wird der zwischen der mindestens einen Kontaktelektrode und der mindestens einen Sammelelektrode fließende Strom gemessen. Ist der Strom trotz einer Vielzahl an Pflanzen, die bei einer Bewegung des Systems in Kontakt mit der mindestens einen Kontaktelektrode kommen, zu niedrig, ist es denkbar, dass der Erdbereich, in dem die Pflanzen stecken, und/oder die Pflanzen zu trocken sind. Es ist denkbar, eine Steuerung vorzusehen, die bei einer zu geringen Stromstärke Flüssigkeit auf einen Gleisabschnitt der Gleisanlage appliziert, bevor die mindestens eine Kontaktelektrode bei einer Bewegung des erfindungsgemäßen Systems den entsprechenden Gleisabschnitt erreicht. Denkbar ist auch, dass der Feuchtegrad eines Gleisabschnitts durch andere Sensoren, beispielsweise optische Sensoren ermittelt wird.

Vorzugsweise ist im hinteren Bereich der Vorrichtung eine Löschanlage angebracht. Bei der Bekämpfung von Pflanzen mit elektrischer Energie kann es zu Funkenschlägen kommen, die bei Trockeneinheit der Gleisanlage ein Feuer entfachen können. Vorzugsweise sind Sensoren an der Vorrichtung angebracht, die Funken und/oder Feuer detektieren und ein entsprechendes Signal an eine Steuereinheit leiten. Die Steuereinheit ist so konfiguriert, dass sie bei einem entsprechenden Signal die Löschanlage veranlasst, ein Löschmittel zu applizieren. Als Sensoren eignen sich insbesondere optische Sensoren (z.B. Kameras), die die von Funken und/oder Feuer ausgehende elektromagnetische Strahlung erfassen.

Vorzugsweise sind im vorderen Bereich der Vorrichtung eine oder mehrere Kameras angebracht, die Bildaufnahmen von der Gleisanlage erzeugen und diese an eine Auswerteeinheit leiten. Die Auswerteeinheit ist konfiguriert, die Bildaufnahmen zu analysieren und Pflanzen und/oder Pflanzenspezies auf der Gleisanlage zu erkennen / zu identifizieren. Vorzugsweise wird die Größe der Pflanzen in der Bildaufnahme ermittelt. Die Ergebnisse der Analyse werden einer Steuereinheit zugeführt. Es ist denkbar, dass die Steuereinheit, die Länge der Kontaktelektroden und/oder der Sammelelektroden an die Größe der Pflanzen anpasst. Vorzugsweise wird Spannung zwischen der mindestens einen Kontaktelektrode und der mindestens einen Sammelelektrode angelegt, wenn Pflanzen auf der Gleisanlage erkannt werden und/oder wenn eine Mindestmenge an Pflanzen in der Gleisanlage erkannt werden und/oder wenn Pflanzen mit einer Mindestgröße erkannt werden und/oder wenn definierte Pflanzenspezies erkannt werden. Denkbar ist auch, dass Elektrizitätsparameter (insbesondere Spannung und/oder Frequenz) an die erkannten Dinge angepasst werden.

Vorzugsweise sind im vorderen Bereich der Vorrichtung Sensoren vorhanden, die die Beschaffenheit und/oder Form der vorausliegenden Gleisanlage erfassen und Signale an eine Steuereinheit senden. Es ist denkbar, dass die Steuereinheit, die Länge der mindestens einen Kontaktelektrode und/oder der mindestens einen Sammelelektrode und/oder Spannungsparameter (insbesondere Spannung und/oder Frequenz) an die Beschaffenheit und/oder Form der vorausliegenden Gleisanlage anpasst.

Die Erfindung wird nachfolgend anhand von Zeichnungen näher erläutert, ohne die Erfindung auf die in den Zeichnungen gezeigten Merkmale und Merkmalskombinationen beschränken zu wollen.

Es zeigen:

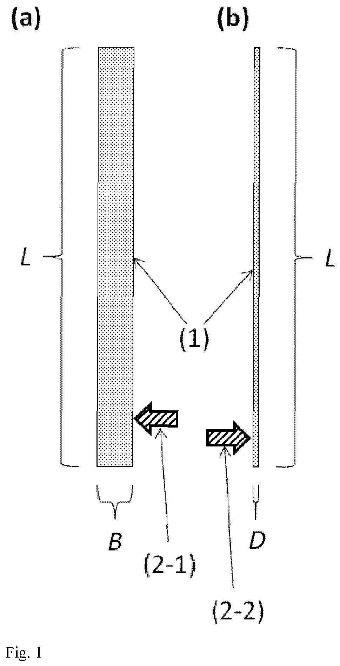

Fig. 1 zeigt beispielhaft und schematisch eine Elektrode (Kontaktelektrode und/oder Sammelelektrode). Fig. 1 (a) zeigt die Elektrode in einer Frontalansicht; Fig. 1 (b) zeigt die Elektrode in einer Seitenansicht. Die Elektrode (1) weist die Form eines Bandes auf. Die Elektrode (1) weist eine Länge *L,* eine Breite *B* und eine Dicke *D* auf.

Die Länge *L* der Elektrode ist um ein Vielfaches größer als die Breite *B* und die Breite *B* ist um ein Vielfaches größer als die Dicke *D.* Diese Form führt dazu, dass die Größe des Widerstands, den die Elektrode einer äußeren Kraft entgegensetzt, davon abhängt, in welche Richtung die Kraft auf die Elektrode einwirkt. Wirkt eine Kraft in Richtung (2-1) entlang der Breite auf die Elektrode ein, so ist der Widerstand, den die Elektrode dieser Kraft entgegensetzt, größer als der Widerstand, den die Elektrode einer Kraft entgegensetzt, die in Richtung (2-2) entlang der Dicke auf die Elektrode einwirkt.

Die Elektrode (1) ist symmetrisch ausgeführt. Sie weist zwei Spiegelebenen auf, eine erste Spiegelebene wird durch die Länge *L* und die Breite *B* aufgespannt; eine zweite Spiegelebene wird durch die Länge *L* und die Dicke *D* aufgespannt. Die Symmetrie in Bezug auf die erste Spieglebene führt dazu, dass die Biegesteifigkeit der Elektrode (1) in Bezug auf eine Kraft, die in Richtung (2-2) auf die Elektrode einwirkt, genauso groß ist wie die Biegesteifigkeit der Elektrode (1) in Bezug auf eine analoge Kraft, die entgegen der Richtung (2-2) auf die Elektrode einwirkt. Die Symmetrie in Bezug auf die zweite Spieglebene führt dazu, dass die Biegesteifigkeit der Elektrode (1) in Bezug auf eine Kraft, die in Richtung (2-1) auf die Elektrode einwirkt, genauso groß ist wie die Biegesteifigkeit der Elektrode (1) in Bezug auf eine analoge Kraft, die entgegen der Richtung (2-1) auf die Elektrode einwirkt.

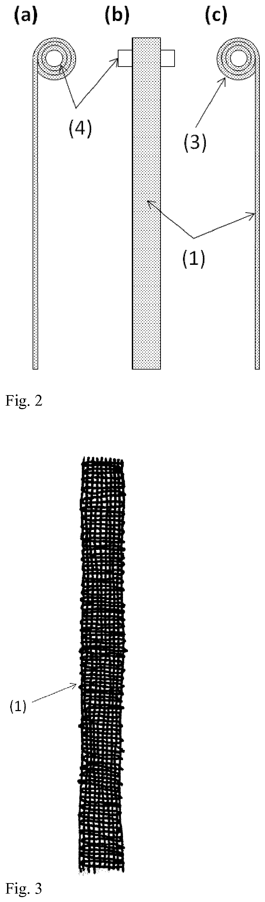

Fig. 2 zeigt beispielhaft und schematisch eine weitere Ausführungsform einer Elektrode (Kontaktelektrode und/oder Sammelelektrode). Fig. 1 (a) zeigt die Elektrode in einer Seitenansicht; Fig. 1 (b) zeigt die Elektrode in einer Frontalansicht. Fig. 1 (c) zeigt die Elektrode in einer weiteren Seitenansicht.

Die Elektrode (1) ist in Form einer Spule (3) auf einen Spulenkern (4) aufgewickelt. Durch Abwickeln von Elektrodenmaterial von der Spule kann die Länge der Elektrode vergrößert werden. Durch Aufwickeln von Elektrodenmaterial auf die Spule kann die Länge der Elektrode verringert werden. Durch Abwickeln von Elektrodenmaterial von der Spule kann Elektrodenmaterial, das in Folge von Verschleiß verloren gegangen ist, ersetzt werden. Es sei angemerkt, dass mit dem Zeichenprogramm zur Erstellung der Figur 2 keine Spirale erzeugt werden konnte, so dass die Spulenwindungen wie konzentrische Kreise aussehen. Dem Fachmann ist jedoch klar, wie eine Spule richtigerweise aussieht. Fig. 2, so wie die übrigen Figuren auch, dienen lediglich der Verdeutlichung der Erfindung und stellen keine technischen Zeichnungen zur Konstruktion dar.

Fig. 3 zeigt beispielhaft und schematisch eine bevorzugte Ausführungsform einer Elektrode (Kontaktelektrode und/oder Sammelelektrode). Die Elektrode (1) ist als Geflecht von Metalldrähten ausgeführt.

Fig. 4 zeigt beispielhaft und schematisch eine bevorzugte Anordnung von mehreren Elektroden (jeweils Kontaktelektroden und/oder jeweils Sammelelektroden). Die Elektroden sind lamellenförmig nebeneinander und in einem konstanten Abstand zueinander angeordnet. Die Elektroden sind auf einem Spulenkern (4) aufgerollt und lassen sich unabhängig voneinander auf- und abwickeln.

Fig. 5 zeigt beispielhaft und schematisch in einer zeitlichen Abfolge, wie eine Kontaktelektrode in eine Richtung bewegt wird und dabei auf eine Pflanze trifft.

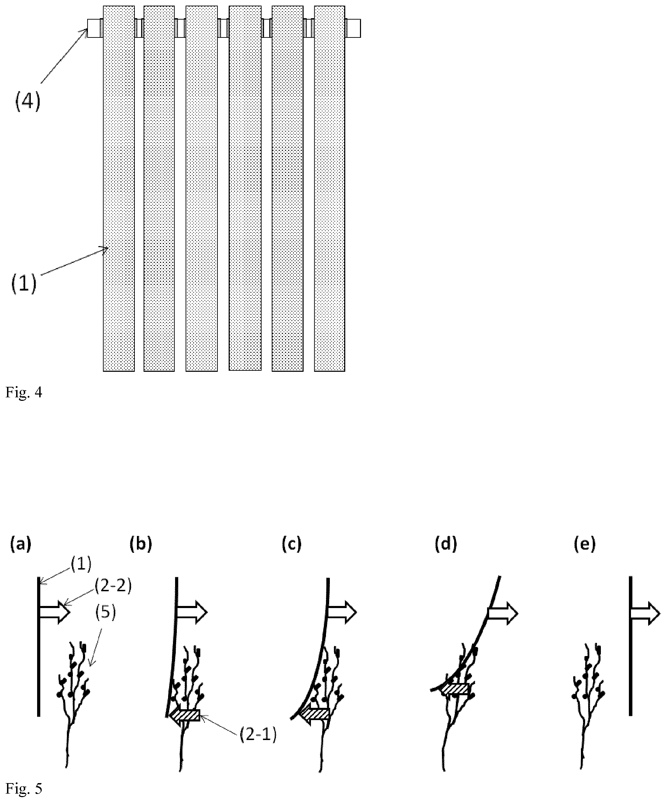

Fig. 5 umfasst fünf Einzelbilder (a), (b), (c), (d) und (e). Die Einzelbilder stelle eine zeitliche Abfolge dar: (a) → (b) → (c) → (d) → (e). Von einem Einzelbild zum nächsten Einzelbild bewegt sich eine Kontaktelektrode (1) in eine Richtung (2-2) und trifft dabei auf eine feststehende (unbewegte) Pflanze (5). In Fig. 5 (a) ist die Kontaktelektrode (1) noch von der Pflanze (5) entfernt und bewegt sich auf diese zu. In Fig. 5 (b) trifft die Kontaktelektrode (1) auf die Pflanze (5). Dadurch, dass sich die Kontaktelektrode (1) in die Richtung (2-2) bewegt, die Pflanze (5) jedoch unbewegt ist, wirkt eine äußere Kraft auf die Kontaktelektrode (1) in eine Richtung (2-1) entgegengesetzt zur Bewegungsrichtung. Die Kontaktelektrode weist eine bestimmte Biegesteifigkeit auf, die der Kraft einen Widerstand entgegensetzt. Die Biegesteifigkeit ist jedoch so gering, dass sich die Kontaktelektrode (1) beim Kontakt mit der Pflanze (5) verformt. In Fig. 5(c) hat sich die Kontaktelektrode (1) ein weiteres Stück in die Richtung (2-2) bewegt. Die Verformung der Kontaktelektrode (1) hat zugenommen. In Fig. 5 (d) hat sich die Kontaktelektrode (1) ein weiteres Stück in die Richtung (2-2) bewegt. Die Verformung der Kontaktelektrode (1) hat weiter zugenommen. Die Kontaktelektrode (1) überstreicht die Pflanze (5). In Fig. 5 (e) hat sich die Kontaktelektrode (1) ein weiteres Stück in die Richtung (2-2) bewegt. Die Kontaktelektrode (1) berührt die Pflanze (5) nicht mehr. Die Kontaktelektrode (1) hat ihre ursprüngliche Form (die Form, die sie in Fig. 5 (a) inne hatte) wiedererlangt. In der Zeitspanne von Fig. 5 (b) bis Fig. 5 (d) hat die Kontaktelektrode Kontakt zur Pflanze (5) und kann Energie in Form von elektrischem Strom in die Pflanze (5) einbringen.

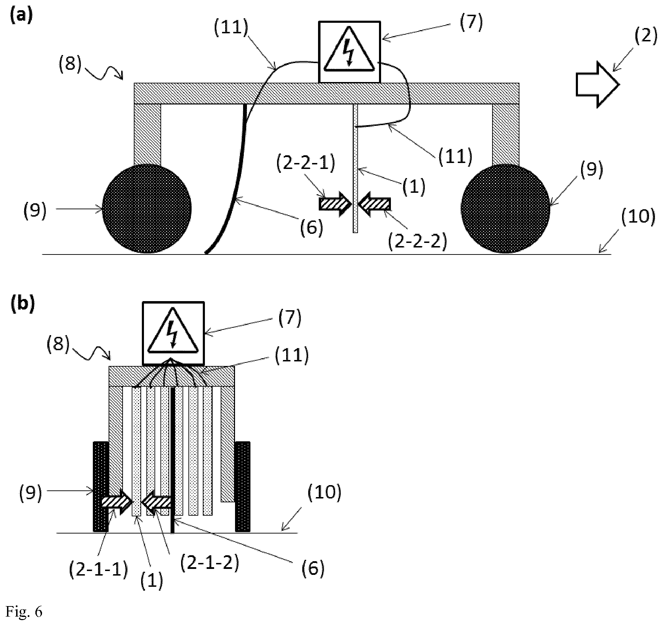

Fig. 6 zeigt beispielhaft und schematisch eine Ausführungsform des erfindungsgemäßen Systems. Fig. 6 (a) zeigt das System in einer Seitenansicht. Fig. 6 (b) zeigt das System in einer Frontalansicht (aus der Richtung (2), in die sich das System bewegt).

Das System ist als Fahrzeug (8) ausgeführt, das sich mittels Räder (9) über einen Boden (10) zumindest in eine Bewegungsrichtung (2) bewegen kann.

An dem Fahrzeug (8) ist eine Mehrzahl an Kontaktelektroden (1) angebracht. Die Kontaktelektroden (1) sind hängend an dem Fahrzeug (8) angebracht. Die Kontaktelektroden (1) sind lamellenartig nebeneinander mit einem konstanten Abstand zueinander angeordnet. Die Kontaktelektroden (1) sind quer (in einem Winkel von 90° bzw. 270°) zur Bewegungsrichtung (2) angeordnet. Die Kontaktelektroden (1) weisen eine Länge, eine Breite und eine Dicke auf. Die Länge erstreckt sich in Richtung der Erdanziehungskraft. Die Dicke erstreckt sich in Richtung der Bewegungsrichtung (2). Die Breite erstreckt sich in eine Richtung quer (in einem Winkel von 90° bzw. 270°) zur Bewegungsrichtung (2). Die Kontaktelektroden (1) sind anisotrop in Bezug auf ihre Biegesteifigkeit. Die Biegesteifigkeit der Kontaktelektroden (1) ist in Bezug auf eine äußere Kraft (2-2-2), die in einer Richtung entgegengesetzt zur Bewegungsrichtung (2) auf die Kontaktelektroden (1) einwirkt, kleiner als die Biegesteifigkeit der Kontaktelektroden (1) in Bezug auf eine äußere Kraft (2-1-2), die in einer Richtung quer zur Bewegungsrichtung (2) auf die Kontaktelektroden (1) einwirkt. Die Kontaktelektroden (1) sind symmetrisch ausgeführt, so dass die Biegesteifigkeit in Bezug auf eine Kraft (2-2-1), die in Richtung der Bewegungsrichtung (2) auf die Kontaktelektroden (1) einwirkt, genau so groß ist wie in Bezug auf die Kraft (2-2-2), die entgegen der Bewegungsrichtung (2) auf die Kontaktelektroden (1) einwirkt; ebenso ist die Biegesteifigkeit in Bezug auf eine Kraft (2-1-1) genau so groß wie in Bezug auf eine Kraft (2-1-2).

Die anisotrope Biegesteifigkeit führt dazu, dass sich die Kontaktelektroden eher in und entgegen der Bewegungsrichtung verformen können als in eine Richtung quer zur Bewegungsrichtung.

Die Kontaktelektroden (1) berühren den Boden (10) nicht. Zwischen dem unteren Ende der Kontaktelektroden (1) und dem Boden (10) herrscht ein Abstand.

Das Fahrzeug (8) weist ferner eine Sammelelektrode (6) auf. Die Sammelelektrode (6) ist in Bewegungsrichtung (2) hinter den Kontaktelektroden (1) angeordnet. Die mindestens eine Sammelelektrode (6) berührt den Boden (10). Es ist denkbar, dass die Räder (9) als weitere Sammelelektroden fungieren.

Das Fahrzeug (8) weist ferner eine Spannungsquelle (7) auf. Die Spannungsquelle (7) ist über elektrische Leitungen (11) sowohl mit den Kontaktelektroden (1) als auch mit der mindestens einen Sammelelektrode (6) verbunden. Mittels der Spannungsquelle (7) kann eine elektrische Spannung zwischen den Kontaktelektroden (1) und der mindestens einen Sammelelektrode (6) angelegt werden.

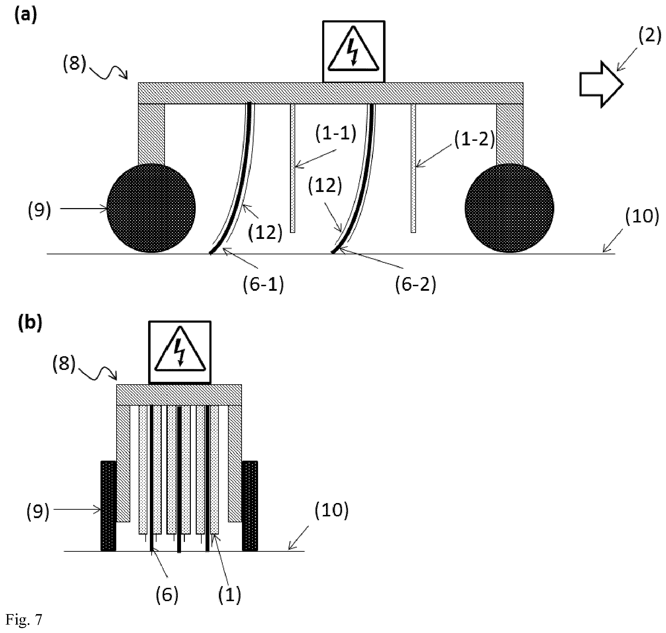

Fig. 7 zeigt eine weitere Ausführungsform des erfindungsgemäßen Systems. Fig. 7 (a) zeigt das System in einer Seitenansicht. Fig. 7 (b) zeigt das System in einer Frontalansicht (aus der Richtung (2), in die sich das System bewegt).

Das System ist als Fahrzeug (8) ausgeführt. Das Fahrzeug (8) entspricht dem in Fig. 6 gezeigten Fahrzeug, mit dem Unterschied, dass nun zwei Reihen (1-1, 1-2) von Kontaktelektroden (1) parallel zueinander und in Bewegungsrichtung (2) hintereinander an dem Fahrzeug (8) angebracht sind, und ferner zwei Reihen von Sammelelektroden (6-1, 6-2) parallel zueinander und in Bewegungsrichtung (2) hintereinander an dem Fahrzeug (8) angebracht sind, wobei die Sammelelektroden (6) in einem oberen Abschnitt mit einer Ummantelung versehen sind, die als elektrischer Isolator wirkt, während bei den Sammelelektroden (6) in einem unteren Abschnitt, der im Kontakt mit dem Boden (10) steht, keine Isolierung vorhanden ist. Die Isolierung verhindert einen elektrischen Kurzschluss, falls eine Kontaktelektrode nach hinten in Richtung der Sammelelektroden geschleudert wird und mit einer Sammelelektrode in Kontakt kommt.

Es ist denkbar, dass die Räder (9) als weitere Sammelelektroden fungieren.

## Patentansprüche

1. System zur Bekämpfung von Pflanzen umfassend
• mindestens eine Kontaktelektrode (1),
• mindestens eine Sammelelektrode (6),
• mindestens eine Spannungsquelle (7) zum Anlegen einer Spannung zwischen der mindestens einen Kontaktelektrode (1) und der mindestens einen Sammelelektrode (6) und
• Mittel (8) zur Bewegung des Systems in eine Bewegungsrichtung (2),
wobei die mindestens eine Kontaktelektrode (1) hängend angebracht ist.
wobei die mindestens eine Kontaktelektrode (1) eine Länge *L,* eine Breite *B* und eine Dicke *D* aufweist.
wobei sich die Länge *L* entlang der Richtung der Schwerkraft, die Dicke *D* entlang der Bewegungsrichtung (2) und die Breite *B* quer zur Bewegungsrichtung (2) erstreckt und wobei die Länge *L* mindestens das Zehnfache der Breite *B* und die Breite *B* mindestens das Dreifache der Dicke *D* beträgt und in Bezug auf eine äußere Kraft, die entgegen der Bewegungsrichtung (2) auf die mindestens eine Kontaktelektrode (1) einwirkt, eine geringere Biegesteifigkeit aufweist, als in Bezug auf eine äußere Kraft, die quer zur Bewegungsrichtung (2) auf die mindestens eine Kontaktelektrode (1) einwirkt;
**dadurch gekennzeichnet, dass** die mindestens eine Kontaktelektrode (1) auf einer Spule (3) aufgewickelt ist und die Länge *L* der mindestens einen Kontaktelektrode (1) durch Abwickeln von der Spule (3) vergrößert und durch Aufwickeln auf die Spule (3) verkleinert werden kann.

2. System gemäß Anspruch 1, wobei das System ein Schienenfahrzeug (8) umfasst oder ein Fahrzeug (8) umfasst, das über Mittel (9) verfügt, um sich auf oder entlang von Schienen fortzubewegen.

3. System gemäß einem der vorangegangenen Ansprüche, wobei die mindestens eine Kontaktelektrode (1) einen Körper aus geflochtenen und/oder verdrillten Metalldrähten umfasst.

4. System gemäß einem der vorangegangenen Ansprüche, wobei eine Mehrzahl an Kontaktelektroden (1) lamellenförmig quer oder schräg zur Bewegungsrichtung (2) nebeneinander angeordnet ist.

5. System gemäß einem der vorangegangenen Ansprüche, wobei die mindestens eine Kontaktelektrode (1) eine Länge *L* aufweist, die so dimensioniert ist, dass der Abstand zwischen dem unteren, dem Boden (10) zugewandten Ende der mindestens einen Kontaktelektrode (1), und dem Boden (10) bei einer ruhenden Vorrichtung im Bereich von -0,5 Meter bis 0,5 Meter liegt, wobei ein negativer Abstand bedeutet, dass die Kontaktelektrode (1) den Boden (10) berührt und dass der Bereich der Kontaktelektrode (1), der in Kontakt mit dem Boden (10) steht, eine entsprechende Länge aufweist.

6. System gemäß einem der vorangegangenen Ansprüche, umfassend eine Abgabevorrichtung, die Kontaktelektrodenmaterial nachführt, falls sich die Länge *L* der mindestens einen Kontaktelektrode (1) infolge von Abrasion reduziert hat.

7. System gemäß einem der vorangegangenen Ansprüche, umfassend eine Abtrennvorrichtung, die verschlissenes Kontaktelektrodenmaterial automatisiert abtrennt.

8. System gemäß einem der vorangegangenen Ansprüche, wobei die mindestens eine Sammelelektrode (6) in Kontakt mit einer zu einer Gleisanlage gehörenden Schiene oder mit zwei zu einer Gleisanlage gehörenden Schienen gebracht werden kann.

9. System gemäß einem der vorangegangenen Ansprüche, wobei die Spannung von einer Oberleitung gewonnen wird.

10. System gemäß einem der vorangegangenen Ansprüche, umfassend eine Löschanlage im hinteren Bereich des Systems und einen oder mehrere Sensoren zur Detektion von Funken und/oder Feuer und eine Steuereinheit, die die Löschanlage zum Ausbringen eines Löschmittels veranlasst, falls mittels des einen oder der mehreren Sensoren Funken und/oder Feuer detektiert werden/wird.

11. System gemäß einem der vorangegangenen Ansprüche, umfassend einen oder mehrere Sensoren zur Ermittlung der Länge und/oder eines Verschleißgrads der mindestens einen Kontaktelektrode (1) und/oder der mindestens einen Sammelelektrode(6) .

12. System gemäß einem der vorangegangenen Ansprüche, umfassend einen oder mehrere Sensoren zur
Ermittlung der Beschaffenheit und/oder Form einer in Bewegungsrichtung (2) vorausliegenden Gleisanlage und eine Steuereinheit, die konfiguriert ist, die Länge der mindestens einen Kontaktelektrode (1) und/oder
der mindestens einen Sammelelektrode (6) und/oder Spannungsparameter an die Beschaffenheit und/oder
Form der vorausliegenden Gleisanlage anzupassen.

13. Verwendung eines Systems gemäß einem der Ansprüche 1 bis 12 zur Bekämpfung von Pflanzen (5) auf Bahntrassen oder Gleisanlagen.

14. Verfahren zur Bekämpfung von Pflanzen umfassend die Schritte
- Bereitstellen eines Systems, wobei das System umfasst:
• mindestens eine Kontaktelektrode (1),
• mindestens eine Sammelelektrode (6),
• mindestens eine Spannungsquelle (7) zum Anlegen einer Spannung zwischen der mindestens einen Kontaktelektrode (1) und der mindestens einen Sammelelektrode (6), und
• Mittel (8) zur Bewegung des Systems in eine Bewegungsrichtung (2),
wobei die mindestens eine Kontaktelektrode (1) hängend angebracht ist,
wobei die mindestens eine Kontaktelektrode (1) eine Länge *L,* eine Breite *B* und eine Dicke *D* aufweist, wobei sich die Länge *L* entlang der Richtung der Schwerkraft, die Dicke *D* entlang der Bewegungsrichtung (2) und die Breite *B* quer zur Bewegungsrichtung (2) erstreckt und wobei die Länge *L* mindestens das Zehnfache der Breite *B* und die Breite *B* mindestens das Dreifache der Dicke *D* beträgt und in Bezug auf eine äußere Kraft, die entgegen der Bewegungsrichtung (2) auf die mindestens eine Kontaktelektrode (1) einwirkt, eine geringere Biegesteifigkeit aufweist, als in Bezug auf eine äußere Kraft, die quer zur Bewegungsrichtung (1) auf die mindestens eine Kontaktelektrode (1) einwirkt;
- Anlegen einer Spannung zwischen der mindestens einen Kontaktelektrode (1) und der mindestens einen Sammelelektrode (6),
- Bewegen des Systems über einen Erdbereich, in dem sich Pflanzen (5) befinden, und dabei
- Inkontaktbringen der mindestens einen Kontaktelektrode (1) mit mindestens einem Teil von mindestens einer Pflanze (5),
- Inkontaktbringen der mindestens einen Sammelelektrode (6)
a) mit dem Boden (10), in dem die mindestens eine Pflanze (5) wächst, und/oder
b) mit einem anderen Teil der mindestens einen Pflanze (5), und/oder
c) mit mindestens einem Teil einer benachbarten Pflanze (5),
wobei zwischen der mindestens einen Kontaktelektrode (1) und der mindestens einen Sammelelektrode (6) ein Strom fließt, der zumindest durch einen Teil der mindestens einen Pflanze (5) fließt und die Pflanze (5) schwächt oder zerstört;
**dadurch gekennzeichnet, dass** die mindestens eine Kontaktelektrode (1) auf einer Spule (3) aufgewickelt ist und die Länge *L* der mindestens einen Kontaktelektrode (1) durch Abwickeln von der Spule (3) vergrößert und durch Aufwickeln auf die Spule (3) verkleinert wird

## Claims

1. System for controlling plants comprising
• at least one contact electrode (1),
• at least one collector electrode (6),
• at least one voltage source (7) for applying a voltage between the at least one contact electrode (1) and the at least one collector electrode (6), and
• means (8) for moving the system in a direction (2) of movement,
wherein the at least one contact electrode (1) is fitted in a suspended fashion,
wherein the at least one contact electrode (1) has a length *L,* a width *B* and a thickness *D,* wherein the length *L* extends along the direction of the gravitational force, the thickness *D* extends along the direction (2) of movement and the width *B* extends transversely relative to the direction (2) of movement and wherein the length *L* is at least ten times the width *B* and the width *B* is at least three times the thickness *D,* and, with respect to an external force that acts on the at least one contact electrode (1) counter to the direction (2) of movement, has a lower bending stiffness than with respect to an external force that acts on the at least one contact electrode (1) transversely relative to the direction (2) of movement;
**characterized in that** the at least one contact electrode (1) is wound on a coil (3) and the length *L* of the at least one contact electrode (1) can be increased by unwinding from the coil (3) and decreased by winding onto the coil (3).

2. System according to Claim 1, wherein the system comprises a rail vehicle (8) or comprises a vehicle (8) having means (9) for moving on or along rails.

3. System according to either of the preceding claims, wherein the at least one contact electrode (1) comprises a body composed of braided and/or twisted metal wires.

4. System according to any of the preceding claims, wherein a plurality of contact electrodes (1) are arranged next to one another in lamellar fashion transversely or obliquely relative to the direction (2) of movement.

5. System according to any of the preceding claims, wherein the at least one contact electrode (1) has a length L dimensioned such that the distance between the lower end - facing the ground (10) - of the at least one contact electrode (1) and the ground (10) in the case of a stationary device is in the range of -0.5 metre to 0.5 metre, wherein a negative distance means that the contact electrode (1) is touching the ground (10) and that the region of the contact electrode (1) that is in contact with the ground (10) has a corresponding length.

6. System according to any of the preceding claims, comprising a dispensing device that feeds contact electrode material if the length *L* of the at least one contact electrode (1) has decreased on account of abrasion.

7. System according to any of the preceding claims, comprising a separating device that separates worn contact electrode material in an automated manner.

8. System according to any of the preceding claims, wherein the at least one collector electrode (6) can be contacted with one rail belonging to a track installation or with two rails belonging to a track installation.

9. System according to any of the preceding claims, wherein the voltage is obtained from an overhead line.

10. System according to any of the preceding claims, comprising an extinguishing apparatus in the rear region of the system and one or more sensors for detecting sparks and/or fire and a control unit, which causes the extinguishing apparatus to release an extinguishing composition if sparks and/or fire are/is detected by means of the one or more sensors.

11. System according to any of the preceding claims, comprising one or more sensors for determining the length and/or a degree of wear of the at least one contact electrode (1) and/or of the at least one collector electrode (6).

12. System according to any of the preceding claims, comprising one or more sensors for determining the constitution and/or form of a track installation situated ahead in the direction (2) of movement, and a control unit configured to adapt the length of the at least one contact electrode (1) and/or of the at least one collector electrode (6) and/or voltage parameters to the constitution and/or form of the track installation situated ahead.

13. Use of a system according to any of Claims 1 to 12 for controlling plants (5) on railway lines or track installations.

14. Method for controlling plants comprising the steps of
- providing a system, wherein the system comprises:
• at least one contact electrode (1),
• at least one collector electrode (6),
• at least one voltage source (7) for applying a voltage between the at least one contact electrode (1) and the at least one collector electrode (6), and
• means (8) for moving the system in a direction (2) of movement,
wherein the at least one contact electrode (1) is fitted in a suspended fashion,
wherein the at least one contact electrode (1) has a length *L,* a width *B* and a thickness *D*, wherein the length *L* extends along the direction of the gravitational force, the thickness *D* extends along the direction (2) of movement and the width *B* extends transversely relative to the direction (2) of movement and wherein the length *L* is at least ten times the width *B* and the width *B* is at least three times the thickness *D*, and, with respect to an external force that acts on the at least one contact electrode (1) counter to the direction (2) of movement, has a lower bending stiffness than with respect to an external force that acts on the at least one contact electrode (1) transversely relative to the direction (2) of movement;
- applying a voltage between the at least one contact electrode (1) and the at least one collector electrode (6),
- moving the system over a region of earth in which plants (5) are situated, and in the process
- contacting the at least one contact electrode (1) with at least one part of at least one plant (5),
- contacting the at least one collector electrode (6)
a) with the ground (10) in which the at least one plant (5) is growing, and/or
b) with another part of the at least one plant (5), and/or
c) with at least one part of a neighbouring plant (5), wherein a current flows between the at least one contact electrode (1) and the at least one collector electrode (6), which current flows at least through a part of the at least one plant (5) and weakens or destroys the plant (5) ;
**characterized in that** the at least one contact electrode (1) is wound on a coil (3) and the length *L* of the at least one contact electrode (1) is increased by unwinding from the coil (3) and is decreased by winding onto the coil (3).

## Revendications

1. Système de lutte contre des plantes comprenant
• au moins une électrode de contact (1),
• au moins une électrode collectrice (6),
• au moins une source de tension (7) pour appliquer une tension entre ladite au moins une électrode de contact (1) et ladite au moins une électrode collectrice (6), et
• des moyens (8) pour déplacer le système dans une direction de déplacement (2),
dans lequel ladite au moins une électrode de contact (1) est montée de manière suspendue,
dans lequel ladite au moins une électrode de contact (1) présente une longueur *L*, une largeur *B* et une épaisseur *D,* la longueur *L* s'étendant dans la direction de la gravité, l'épaisseur *D* s'étendant dans la direction de déplacement (2) et la largeur *B* s'étendant transversalement à la direction de déplacement (2), et la longueur *L* étant au moins égale à dix fois la largeur *B* et la largeur *B* étant au moins égale à trois fois l'épaisseur *D*, et par rapport à une force extérieure, qui agit sur ladite au moins une électrode de contact (1) dans une direction opposée à la direction de déplacement (2), présente une rigidité à la flexion plus faible que par rapport à une force extérieure qui agit sur ladite au moins une électrode de contact (1) transversalement à la direction de déplacement (2) ;
**caractérisé en ce que** ladite au moins une électrode de contact (1) est enroulée sur une bobine (3) et la longueur L de ladite au moins une électrode de contact (1) peut être augmentée en la déroulant de la bobine (3) et diminuée en l'enroulant sur la bobine (3).

2. Système selon la revendication 1, dans lequel le système comprend un véhicule ferroviaire (8) ou comprend un véhicule (8) possédant des moyens (9) permettant un déplacement sur des rails ou le long de ceux-ci.

3. Système selon l'une quelconque des revendications précédentes, dans lequel ladite au moins une électrode de contact (1) comprend un corps constitué de fils métalliques tressés et/ou torsadés.

4. Système selon l'une quelconque des revendications précédentes, dans lequel une pluralité d'électrodes de contact (1) sont disposées côte à côte en forme de lamelles transversalement ou de manière oblique par rapport à la direction de déplacement (2).

5. Système selon l'une quelconque des revendications précédentes, dans lequel ladite au moins une électrode de contact (1) présente une longueur *L* qui est dimensionnée de manière à ce que la distance entre l'extrémité inférieure, tournée vers le sol (10), de ladite au moins une électrode de contact (1) et le sol (10) soit comprise entre -0,5 mètre et 0,5 mètre lorsque le dispositif est au repos, une distance négative signifiant que l'électrode de contact (1) est en contact avec le sol (10) et que la zone de l'électrode de contact (1) qui est en contact avec le sol (10) présente une longueur correspondante.

6. Système selon l'une quelconque des revendications précédentes, comprenant un dispositif de distribution qui réapprovisionne en matériau d'électrode de contact dans le cas où la longueur *L* de ladite au moins une électrode de contact (1) a été réduite suite à l'abrasion.

7. Système selon l'une quelconque des revendications précédentes, comprenant un dispositif de séparation qui sépare de manière automatisée le matériau d'électrode de contact usé.

8. Système selon l'une quelconque des revendications précédentes, dans lequel ladite au moins une électrode collectrice (6) peut être mise en contact avec un rail appartenant à une voie ferrée ou avec deux rails appartenant à une voie ferrée.

9. Système selon l'une quelconque des revendications précédentes, dans lequel la tension est obtenue à partir d'une caténaire.

10. Système selon l'une quelconque des revendications précédentes, comprenant un système d'extinction dans la zone arrière du système et un ou plusieurs capteurs pour détecter des étincelles et/ou un incendie, et une unité de commande qui amène le système d'extinction à déployer un agent d'extinction dans le cas où des étincelles et/ou un incendie sont détectés au moyen desdits un ou plusieurs capteurs.

11. Système selon l'une quelconque des revendications précédentes, comprenant un ou plusieurs capteurs pour déterminer la longueur et/ou un degré d'usure de ladite au moins une électrode de contact (1) et/ou de ladite au moins une électrode collectrice (6).

12. Système selon l'une quelconque des revendications précédentes, comprenant un ou plusieurs capteurs pour déterminer la nature et/ou la forme d'une voie ferrée située en amont dans la direction de déplacement (2) et une unité de commande qui est configurée pour adapter la longueur de ladite au moins une électrode de contact (1) et/ou de ladite au moins une électrode collectrice (6) et/ou des paramètres de tension à la nature et/ou à la forme de la voie ferrée située en amont.

13. Utilisation d'un système selon l'une quelconque des revendications 1 à 12 pour lutter contre des plantes (5) sur des chemins de fer ou des voies ferrées.

14. Procédé de lutte contre des plantes comprenant les étapes consistant à
- fournir un système, le système comprenant :
• au moins une électrode de contact (1),
• au moins une électrode collectrice (6),
• au moins une source de tension (7) pour appliquer une tension entre ladite au moins une électrode de contact (1) et ladite au moins une électrode collectrice (6), et
• des moyens (8) pour déplacer le système dans une direction de déplacement (2),
dans lequel ladite au moins une électrode de contact (1) est montée de manière suspendue,
dans lequel ladite au moins une électrode de contact (1) présente une longueur *L*, une largeur *B* et une épaisseur *D,* la longueur *L* s'étendant dans la direction de la gravité, l'épaisseur *D* s'étendant dans la direction de déplacement (2) et la largeur *B* s'étendant transversalement à la direction de déplacement (2), et la longueur *L* étant au moins égale à dix fois la largeur *B* et la largeur *B* étant au moins égale à trois fois l'épaisseur *D*, et par rapport à une force extérieure, qui agit sur ladite au moins une électrode de contact (1) dans une direction opposée à la direction de déplacement (2), présente une rigidité à la flexion plus faible que par rapport à une force extérieure qui agit sur ladite au moins une électrode de contact (1) transversalement à la direction de déplacement (2) ;
- appliquer une tension entre ladite au moins une électrode de contact (1) et ladite au moins une électrode collectrice (6),
- déplacer le système à travers une zone de terrain dans laquelle se trouvent des plantes (5), et ainsi
- mettre en contact ladite au moins une électrode de contact (1) avec au moins une partie d'au moins une plante (5),
- mettre en contact ladite au moins une électrode collectrice (6)
a) avec le sol (10) dans lequel pousse ladite au moins une plante (5), et/ou
b) avec une autre partie de ladite au moins une plante (5), et/ou
c) avec au moins une partie d'une plante voisine (5), dans lequel un courant circule entre ladite au moins une électrode de contact (1) et ladite au moins une électrode collectrice (6), lequel courant circule à travers au moins une partie de ladite au moins une plante (5) et fragilise ou détruit ladite plante (5) ;
**caractérisé en ce que** ladite au moins une électrode de contact (1) est enroulée sur une bobine (3) et la longueur L de ladite au moins une électrode de contact (1) peut être augmentée en la déroulant de la bobine (3) et diminuée en l'enroulant sur la bobine (3).
